# EUROPEAN PATENT APPLICATION

(11) **EP 4 830 884 A1**
(43) Date of publication of application: **28.10.2026**
(21) Application number: 24907500.3
(22) Date of filing: 19.12.2024
(51) Int. Cl.: B25J 19/00, B25J 17/00, G05B 23/02

(54) **ASSISTANCE DEVICE**

(30) Priority: 22.12.2023 JP 2023217401
(71) Applicant: Sumitomo Heavy Industries, Ltd., Tokyo 141-6025 (JP)
(72) Inventor: TANAKA, Mitsuharu, Yokosuka-shi, Kanagawa 237-8555 (JP)
(74) Representative: Louis Pöhlau Lohrentz
(86) International application number: PCT/JP2024/044976
(87) International publication number: WO 2025/135116

(57) **Abstract**

An assistive device includes a storage unit 140 that stores, in association with information enabling a type of a speed reducer to be specified, characteristic information of the speed reducer, the characteristic information changing according to a situation change of the speed reducer, a first reception unit 121 that receives specification information of a robot, a second reception unit 122 that receives designation of a speed reducer to be incorporated into each joint of the robot, an analysis unit 127 that analyzes behavior of the robot in which the designated speed reducer is incorporated into each joint, and a result providing unit that provides a user with an analysis result, in which the analysis unit 127 analyzes the behavior of the robot including a temperature change of a specific site of the robot.

## Description

### Technical Field

The present disclosure relates to an assistive device.

### Background Art

A robot is known in which a speed reducer is incorporated into a plurality of joint portions. For example, PTL 1 discloses a robot in which an eccentric oscillating type reduction gear is incorporated into a joint portion.

### Citation List

### Patent Literature

[PTL 1] Japanese Unexamined Patent Publication No. 2006-263878

### Summary of Invention

### Technical Problem

A speed reducer to be incorporated into each joint is selected in a case where a robot is designed, but the selection is very laborious.

The present disclosure has been made in view of such a situation, and an object of the present disclosure is to provide a technique of assisting selection of a speed reducer.

### Solution to Problem

In order to solve the above problem, an assistive device of an aspect of the present disclosure includes a storage unit that stores, in association with information enabling a type of a speed reducer to be specified, characteristic information of the speed reducer, the characteristic information changing according to a situation change of the speed reducer, a first reception unit that receives specification information of a robot, a second reception unit that receives designation of a speed reducer to be incorporated into each joint of the robot, an analysis unit that analyzes behavior of the robot in which the designated speed reducer is incorporated into each joint, and a result providing unit that provides a user with an analysis result. The analysis unit analyzes the behavior of the robot including a temperature change of a specific site of the robot.

Another aspect of the present disclosure is also an assistive device. The device includes a storage unit that stores, in association with information enabling a type of a speed reducer to be specified, characteristic information of the speed reducer, the characteristic information changing according to a situation change of the speed reducer, a first reception unit that receives specification information of a robot, a third reception unit that receives an operation condition of the robot, an analysis unit that analyzes a temperature change of a specific site of the robot in a case where the robot is operated under a designated operation condition, and a speed reducer proposing unit that proposes, based on an analysis result, one or a plurality of speed reducers to a user.

Any combination of the above components and those in which the components or expressions of the present disclosure are mutually substituted between methods, devices, systems, and the like are also effective as aspects of the present disclosure.

### Advantageous Effects of Invention

According to the present disclosure, it is possible to provide a technique of assisting the selection of the speed reducer.

### Brief Description of Drawings

FIG. 1 is a schematic diagram showing a configuration of a speed reducer selection assistive system according to a first embodiment.
FIG. 2 is a block diagram showing functions and a configuration of a speed reducer selection assistive device of FIG. 1.
FIG. 3 is a diagram showing an example of a selection assistive screen provided by a screen providing unit in FIG. 2.
FIG. 4 is a graph showing an example of an analysis result provided to a user.
FIG. 5 is a graph showing another example of the analysis result provided to the user.
FIG. 6 is a graph showing still another example of the analysis result provided to the user.
FIG. 7 is a graph showing still another example of the analysis result provided to the user.
FIG. 8 is a table showing an example of an estimation result screen provided to the user.
FIG. 9 is a table showing an example of a data structure of a raw material information storage unit of FIG. 2.
FIG. 10 is a table showing an example of a data structure of a robot state information storage unit of FIG. 2.
FIG. 11 is a diagram showing an example of a supervised data creation screen provided by the screen providing unit in FIG. 2.
FIG. 12 is a block diagram showing functions and a configuration of a speed reducer selection assistive device according to a second embodiment.
FIG. 13 is a diagram showing an example of a selection assistive screen provided by a screen providing unit in FIG. 9.

### Description of Embodiments

Hereinafter, the same reference numerals will be assigned to the same or equivalent components, members, and processes in drawings, and overlapping description thereof will be omitted as appropriate. Further, dimensions of the members in each drawing are shown enlarged or reduced as appropriate for easy understanding. Further, some members that are not important for describing the embodiment will be omitted in each drawing.

### (First Embodiment)

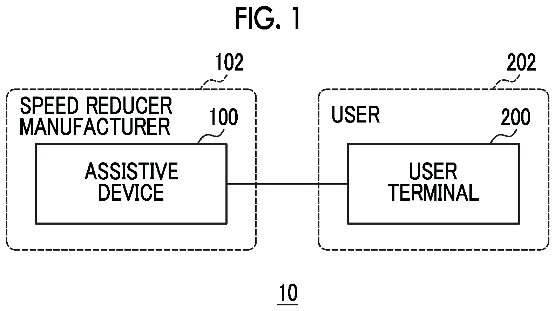

FIG. 1 is a schematic diagram showing a configuration of an assistive system 10 according to a first embodiment. The assistive system 10 is for assisting a user regarding a speed reducer. The assistive system 10 includes an assistive device 100 and a user terminal 200. The assistive device 100 and the user terminal 200 are connected to each other via a network such as the Internet.

The assistive device 100 is an information processing device managed by a speed reducer manufacturer 102. The speed reducer manufacturer 102 is a company that manufactures the speed reducer. The speed reducer is a reduction gear or a gear motor (device in which reduction gear is connected to motor). The term "managed by speed reducer manufacturer 102" herein includes not only a case where the management is directly performed by the speed reducer manufacturer 102, but also a case where the management is performed by a company entrusted by the speed reducer manufacturer 102.

The assistive device 100 is configured by a single device (casing) in the present embodiment, but the number of physical casings of the assistive device 100 is not limited. The assistive device 100 may be realized by cooperation between a plurality of devices.

The assistive device 100 realizes "selection assistive function" and "supervised data creation function". The selection assistive function is to assist selection of a speed reducer to be incorporated into a joint of a robot. The supervised data creation function creates supervised data required for training of a machine learning device that performs failure diagnosis on the robot into which the selected speed reducer is incorporated. The term "failure diagnosis" herein includes at least one of diagnosis of whether or not a failure has occurred or diagnosis of whether or not there is a high possibility that a failure will occur (that is, failure prediction).

The user terminal 200 is an information processing terminal used by a user 202, and is a general PC, a tablet terminal, or a smartphone, for example. The user 202 is not particularly limited, but is typically a robot manufacturer. That is, the user 202 selects the speed reducer to be incorporated into the joint of the robot. That is, the user 202 selects the speed reducer to be incorporated into the joint of the robot or incorporates the selected speed reducer into the joint of the robot to use the speed reducer.

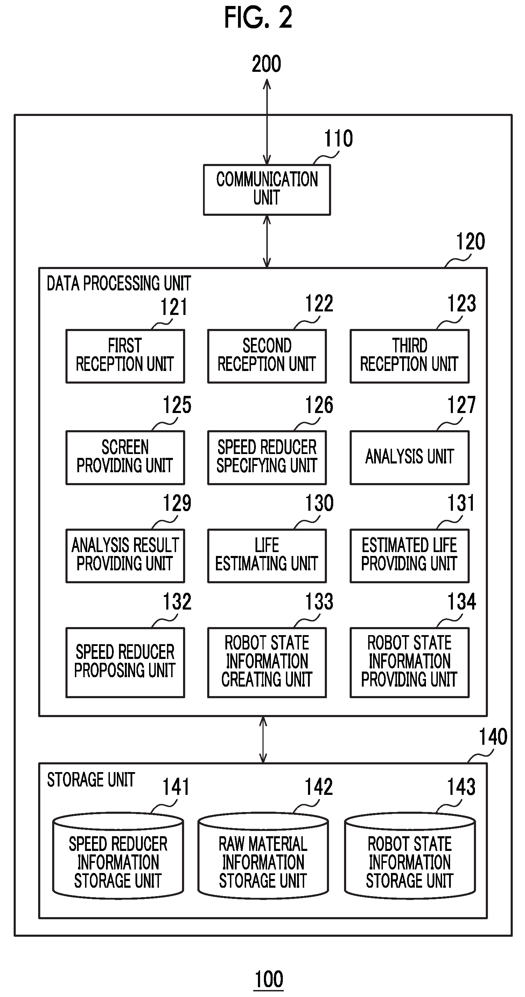

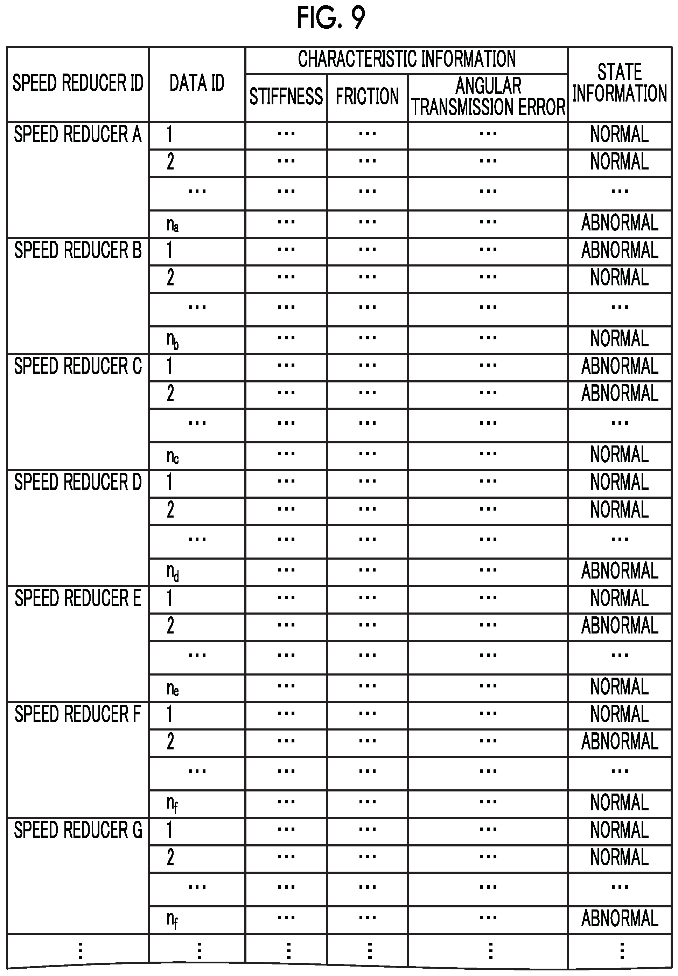

FIG. 2 is a block diagram showing functions and a configuration of the assistive device 100. Each block shown here can be realized by elements such as a central processing unit (CPU) of a computer or a machine device in terms of hardware, and can be realized by a computer program or the like in terms of software. Here, functional blocks are realized in cooperation between the hardware and the software. Therefore, it is understood by those skilled in the art from this specification that such functional blocks can be realized in various manners through combinations between the hardware and the software. The same applies to a block diagram of FIG. 9.

The assistive device 100 includes a communication unit 110, a data processing unit 120, and a storage unit 140. The communication unit 110 executes communication processing with the user terminal 200 in accordance with various communication protocols. The data processing unit 120 executes various types of data processing based on data acquired by the communication unit 110 or data stored in the storage unit 140. The storage unit 140 stores various types of data prepared in advance or the data received from the communication unit 110 or the data processing unit 120.

The data processing unit 120 includes a first reception unit 121, a second reception unit 122, a third reception unit 123, a screen providing unit 125, a speed reducer specifying unit 126, an analysis unit 127, an analysis result providing unit 129, a life estimating unit 130, an estimated life providing unit 131, a speed reducer proposing unit 132, a robot state information creating unit 133, and a robot state information providing unit 134.

The storage unit 140 includes a speed reducer information storage unit 141, a raw material information storage unit 142, and a robot state information storage unit (supervised data storage unit) 143.

The components of the data processing unit 120 and the storage unit 140 show only components of interest in the present embodiment.

### <Selection Assistive Function>

The selection assistive function will be described. The selection assistive function is mainly realized by the speed reducer information storage unit 141, the first reception unit 121, the second reception unit 122, the third reception unit 123, the screen providing unit 125, the speed reducer specifying unit 126, the analysis unit 127, the analysis result providing unit 129, the life estimating unit 130, the estimated life providing unit 131, and the speed reducer proposing unit 132.

The speed reducer information storage unit 141 stores, for each of a plurality of speed reducers, a speed reducer ID for uniquely identifying the speed reducer, information for specifying a type of the speed reducer (hereinafter also referred to as type specification information), characteristic information of the speed reducer, and heat capacity information of the speed reducer in association with each other. The type specification information includes a model, frame number, reduction ratio, and the like of the speed reducer.

In a case where the speed reducer is the reduction gear, the characteristic information includes the characteristic information of the reduction gear. In a case where the speed reducer is the gear motor, the characteristic information includes the characteristic information of both the reduction gear and a motor, which configure the gear motor. The characteristic information includes a friction, an angular transmission error, and the like. The characteristic information is not particularly limited, but is defined to change according to a change in a situation (for example, temperature or rotational speed) of the speed reducer. That is, the friction is defined as a function with at least the temperature and the rotational speed as variables. Similarly, the angular transmission error is defined as a function with at least a reduction gear rotation angle as a variable.

The heat capacity information can be used to specify a heat capacity. Thus, the heat capacity information may include the heat capacity itself. Further, the heat capacity information may include a specific heat and a mass. This is because the heat capacity is a product of the specific heat and the mass. The heat capacity information may include a density and a volume, instead of the mass. That is, the heat capacity information may include the specific heat, the density, and the volume. The heat capacity information may include a type of material, instead of the specific heat and the density. That is, the heat capacity information may include the type of material and the volume.

In a case where the speed reducer is the reduction gear, the heat capacity information of the speed reducer includes the heat capacity information of the reduction gear. The heat capacity information of the reduction gear includes heat capacity information of a casing of the reduction gear and heat capacity information of a component member in the casing. In a case where the speed reducer is the gear motor, the heat capacity information of the speed reducer includes heat capacity information of both the reduction gear and the motor, which configure the gear motor. The heat capacity information of the motor includes heat capacity information of a casing of the motor and heat capacity information of a component member in the casing.

The speed reducer information storage unit 141 may store information on all speed reducers manufactured by the speed reducer manufacturer 102. Further, the speed reducer information storage unit 141 may store information on speed reducers that have been manufactured in the past (that is, manufacturing has been ended), in addition to information on speed reducers being manufactured.

The screen providing unit 125 transmits a selection assistive screen, which is a screen assisting the selection of the speed reducer, to the user terminal 200 in response to a request, and displays the selection assistive screen on a display of the user terminal 200.

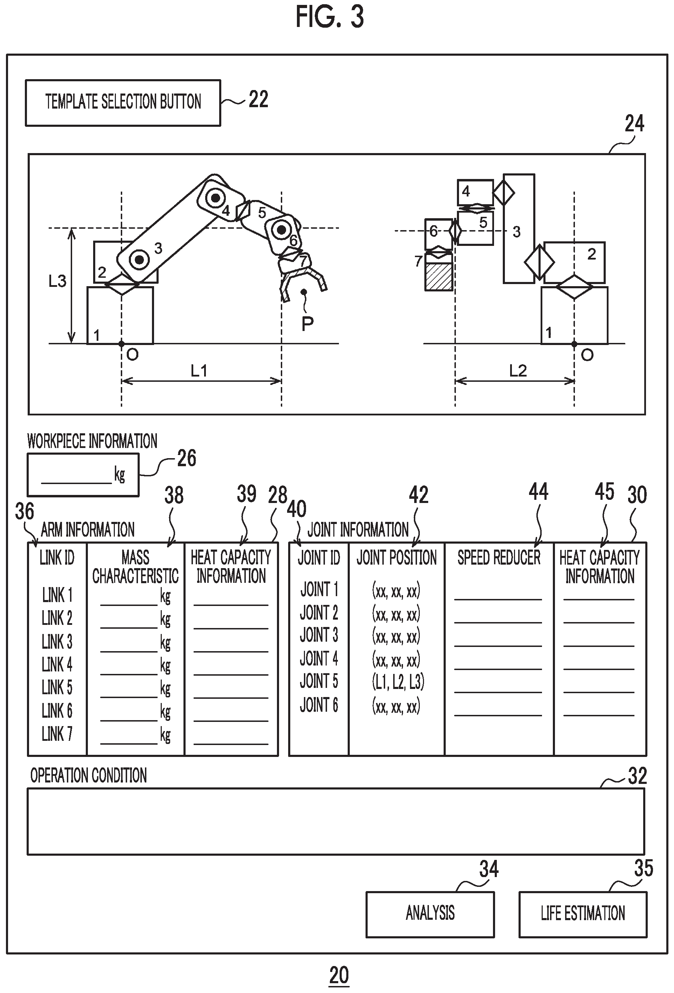

FIG. 3 is a diagram showing an example of the selection assistive screen 20 provided by the screen providing unit 125. The selection assistive screen 20 includes a template selection button 22, a robot display region 24, a workpiece information field 26, an arm information region 28, a joint information region 30, an operation condition field 32, an analysis button 34, and a life estimation button 35.

In a case where the template selection button 22 is selected, a list of templates prepared in advance (not shown) is displayed. The user selects, from the list of the displayed templates, a template corresponding to a robot to be configured. A schematic diagram of the robot of the selected template is displayed in the robot display region 24.

A mass characteristic of a workpiece is input into the workpiece information field 26. The mass characteristic is, for example, a weight, a centroid position, or a moment of inertia.

The arm information region 28 includes a link ID field 36, a link mass characteristic field 38, and a heat capacity information field 39. The link ID field 36 displays an ID for identifying a link. The number of links of the robot is determined by the template selection. The mass characteristic of the link is input into the link mass characteristic field 38. The heat capacity information of the link is input into the heat capacity information field 39. The heat capacity information of the link may be the heat capacity of the link itself, or may be the volume and specific heat of the link or the type of material thereof.

The joint information region 30 includes a joint ID field 40, a joint position field 42, a speed reducer field 44, and a heat capacity information field 45. The joint ID field 40 displays an ID for identifying the joint (rotary shaft). The number of joints of the robot is determined by the template selection.

A three-dimensional position of each joint (rotary shaft) in a reference posture (for example, initial posture) of the robot with a predetermined reference point O (refer to the robot display region 24) as an origin is input into the joint position field 42. A default value set in the template may be input into the joint position field 42. In this case, the user may change the default value in the joint position field 42 by, for example, direct input as necessary. In the illustration displayed in the robot display region 24, the position of the joint may be changeable by an operation such as drag and drop, and the input into the joint position field 42 may be changed accordingly. That is, the input into the joint position field 42 may be performed in a form of the template change.

Information for designating the speed reducer to be incorporated into each joint, for example, a model, frame number, or specification information of the speed reducer is input into the speed reducer field 44. The specification information of the speed reducer includes, for example, the reduction ratio and a required torque. In a case where the speed reducer is the gear motor, the specification information of the speed reducer includes, for example, a moment of inertia of the motor and a maximum generated torque. A plurality of pieces of information, for example, a plurality of pieces of specification information for one joint may be input into the joint position field 42. For example, both the reduction ratio and the required torque for one joint may be input into the joint position field 42. In a case where the speed reducer does not include the motor, there may be a form in which the moment of inertia of the motor or the maximum generated torque is selected from the template in the same manner as the speed reducer, or there may be a form in which the user can individually designate the moment of inertia of the motor or the maximum generated torque.

In a case where the speed reducer is the reduction gear, the heat capacity information of the motor connected to the speed reducer, which is the reduction gear, is input into the heat capacity information field 45. The heat capacity information of the motor includes heat capacity information of a casing of the motor and heat capacity information of a component member in the casing. The heat capacity information field 45 may be left blank in a case where the speed reducer is the gear motor.

An operation condition of the robot is input into the operation condition field 32. For example, the operation condition includes a start point and an end point at which a reference point P of a tool attached to a tip of an arm of the robot moves, a stopping time at each point, the presence or absence of a workpiece during the operation, and a speed and an acceleration at which the reference point P moves. Further, for example, the operation condition is a three-dimensional target path along which the reference point P moves. The operation condition may be input in a form set in advance for each type. A control method or a control parameter of the motor in a case where behavior analysis is performed may be in a user adjustable form. A condition for sequentially performing a plurality of operations may be provided. It is desirable that a series of operations is input as one cycle in life calculation, and thus a restriction may be made such that the start point matches the end point during the reception of the user input.

A plurality of operation conditions may be input into the operation condition field 32. In this case, the plurality of operation conditions may be input in an execution order. Further, for the plurality of operation conditions, the number of times the robot is operated or a robot operation time under each operation condition is input.

In a case where the analysis button 34 is selected, each information item in FIG. 3 is transmitted from the user terminal 200 to the assistive device 100, and the analysis described below is executed in the assistive device 100.

In a case where the life estimation button 35 is selected, each information item in FIG. 3 is transmitted from the user terminal 200 to the assistive device 100, and life estimation described below is executed in the assistive device 100.

The description returns to FIG. 2. The first reception unit 121 receives, from the user via the user terminal 200, specification information of the robot. Specifically, the first reception unit 121 receives, from the user terminal 200, the information items related to a specification of the robot on the selection assistive screen 20 in FIG. 3, specifically, the mass characteristic of the workpiece, the mass characteristic of the link, the heat capacity information of the link, the number of joints, and a joint position of each joint. Further, in a case where the speed reducer of any joint is the reduction gear and the heat capacity information is input into the heat capacity information field 45 on the selection assistive screen 20 in FIG. 3, the first reception unit 121 also receives the heat capacity information.

The second reception unit 122 receives, from the user via the user terminal 200, the designation of the speed reducer to be incorporated into each joint of the robot. Specifically, the second reception unit 122 receives, from the user terminal 200, the input into the speed reducer field 44 of the selection assistive screen 20 in FIG. 3.

The third reception unit 123 receives, from the user via the user terminal 200, the operation condition of the robot. Specifically, the third reception unit 123 receives, from the user terminal 200, the input into the operation condition field 32 of the selection assistive screen 20 in FIG. 3.

The speed reducer specifying unit 126 specifies the speed reducer, based on the designation of the speed reducer received by the second reception unit 122. Specifically, the speed reducer specifying unit 126 specifies, from the speed reducer information storage unit 141, the speed reducer ID of the speed reducer that matches the designation of the speed reducer, which is received by the second reception unit 122, and the characteristic information of the speed reducer. The plurality of speed reducers may be specified. For example, in a case where the information for designating the speed reducer is the specification information of the speed reducer, a plurality of speed reducers that match the specification information, that is, satisfy the specification information may be present. In this case, the speed reducer specifying unit 126 may specify the plurality of speed reducers.

In the analysis unit 127, the analysis is performed, by simulation, on the behavior in a case where the speed reducer specified by the speed reducer specifying unit 126, based on the designation received by the second reception unit 122, is incorporated into the joint of the robot having the specification received by the first reception unit 121, and then the robot is operated under the operation condition received by the third reception unit 123. In the analysis unit 127, the analysis is executed, for example, in a case where the analysis button 34 in FIG. 3 is selected. In the analysis unit 127, the analysis may be performed by using a known or future available analysis technique. In the above analysis, the analysis unit 127 uses the characteristic information stored in the speed reducer information storage unit 141, as the characteristic information of the speed reducer incorporated into each joint.

In a case where the speed reducer specifying unit 126 specifies the plurality of speed reducers for a certain joint, the analysis unit 127 may sequentially incorporate the plurality of speed reducers into the joint and analyze the behavior in each case.

The analysis result providing unit 129 provides the user with an analysis result by the analysis unit 127. The analysis result includes, for example, a deviation from a command value for a position of the reference point P of the tool attached to the tip of the arm of the robot, a deviation from a command value for a rotation angle of each joint (rotary shaft), and a comparison between a load applied to the speed reducer and an allowable load included in the characteristic information of the speed reducer. The analysis result providing unit 129 transmits, for example, an analysis result screen showing the analysis result to the user terminal 200 to display the analysis result screen on the display of the user terminal 200.

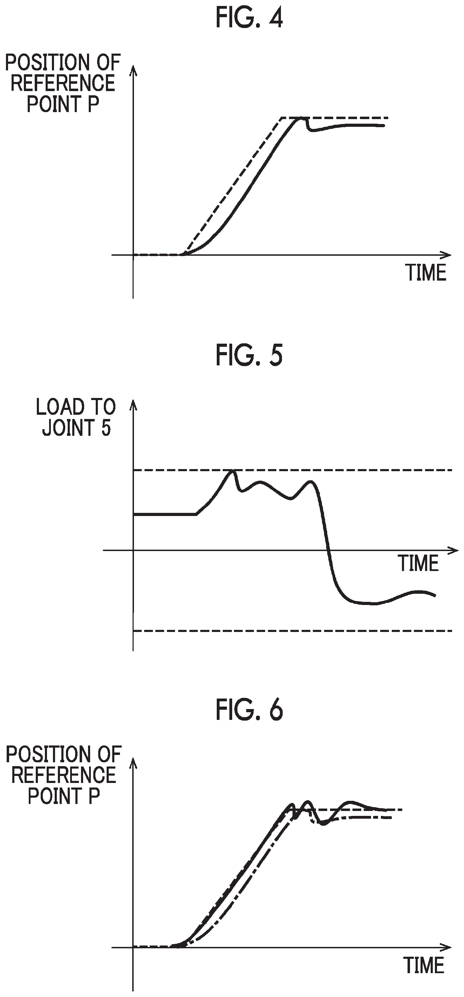

FIG. 4 is a graph showing an example of the analysis result provided to the user. The analysis result of this example is an error between the command value and the position of the reference point P in a case where the reference point P of the tool is moved along a target trajectory. In FIG. 4, the horizontal axis shows time, and the vertical axis shows the position of the reference point P of the tool. In the graph, a solid line indicates the analysis result, and a broken line indicates the command value.

FIG. 5 is a graph showing another example of the analysis result provided to the user. In FIG. 5, the horizontal axis is time, and the vertical axis is the load applied to the joint, that is, the speed reducer. In the graph, a solid line indicates the analysis result, and broken lines indicate the allowable load of the speed reducer.

With checking of the analysis results in FIGS. 4 and 5, the user can understand at a glance the behavior of the robot in a case where the designated speed reducer is incorporated.

FIG. 6 is a graph showing still another example of the analysis result provided to the user. The analysis result of this example is an error between the command value and the position of the reference point P in a case where the reference point P of the tool is moved along the target trajectory, as in FIG. 4. This example shows the analysis result in a case where the speed reducer specifying unit 126 specifies a plurality of candidates for the speed reducer for a certain joint and the analysis unit 127 analyzes the behavior in each case. In the graph, a solid line and a one-dot chain line indicate the analysis results, and a broken line indicates the command value. The analysis result for each of the plurality of candidates is presented, and thus the user can select a more appropriate speed reducer.

The analysis by the analysis unit 127 will be further described. The analysis unit 127 may analyze a temperature change in a specific site of the robot, as one piece of behavior of the robot. The reduction gear generates heat due to friction, and the motor generates heat due to loss (iron loss, copper loss, or the like). Due to the heat generation, a temperature of each site of the robot rises.

The analysis unit 127 executes first analysis and second analysis to analyze the temperature change in the specific site of the robot. In the first analysis, the behavior of the robot during the operation is analyzed to obtain a heat generation amount of the reduction gear and the motor. In the second analysis, heat movement is calculated to obtain the temperature change in each member.

In the first analysis, the analysis is performed on the behavior in a case where the speed reducer specified by the speed reducer specifying unit 126 based on the designation received by the second reception unit 122 is incorporated into the joint of the robot having the specification received by the first reception unit 121 and the robot is operated under the operation condition received by the third reception unit 123 to obtain a friction torque of the reduction gear, a motor current value, and the rotational speeds of the reduction gear and the motor. In the first analysis, with the calculation using the friction torque and the rotational speed, the heat generation amount of the reduction gear is obtained. Further, in the first analysis, with the calculation using the motor current and the rotational speed, the heat generation amount of the motor is obtained.

In the second analysis, the heat movement is calculated by using a heat generation amount of a heat generation source, the heat capacity of each member, a heat transfer coefficient between the members, and a heat transfer coefficient between each member and the environment to calculate the temperature of each member. In the second analysis, a known or future available calculation equation may be used. The heat generation source is a component member in the reduction gear and a component member in the motor. Each member is the component member in the reduction gear, the casing of the reduction gear, the component member in the motor, the casing of the motor, and the arm of the robot. The heat capacity of the component member in the reduction gear, the heat capacity of the casing of the reduction gear, the heat capacity of the component member in the motor, and the heat capacity of the casing of the motor are specified from the speed reducer information storage unit 141. The first reception unit receives the heat capacity of the arm of the robot from the selection assistive screen 20. A value determined based on an experiment, a simulation, or knowledge is used as the heat transfer coefficient. As a modification example, the heat transfer coefficient for each speed reducer may be stored in the speed reducer information storage unit 141. Further, the user may input the heat transfer coefficient.

Here, since the friction of the reduction gear changes according to the temperature, the heat generation amount also changes in a case where the temperature of the reduction gear changes. Since a winding resistance of a coil of the motor changes according to the temperature, the heat generation amount also changes in a case where the temperature of the motor changes. In a case where the heat generation amounts of the reduction gear and the motor change, the temperature change of each member is also affected. Thus, the first analysis and the second analysis are alternately repeated and executed. In the first analysis, the heat generation amount is analyzed by using the temperature obtained by the second analysis executed immediately before. In the second analysis, the temperature is analyzed by using the heat generation amount obtained by the first analysis executed immediately before. That is, coupled analysis is performed.

In a case where the third reception unit 123 receives a plurality of consecutive operation conditions, the analysis unit 127 analyzes a continuous temperature change in the plurality of consecutive operation conditions as the behavior. In the present embodiment, since the first analysis is repeatedly executed, even in a case where the operation condition is changed in the middle, the heat generation amount under a new operation condition is analyzed, and thus the temperature change in a case where the operation condition is changed in the middle can be appropriately analyzed.

An interval between the first analysis and the second analysis is not particularly limited. The second analysis may be executed without delay after the first analysis is executed. The first analysis and the second analysis may be executed at a predetermined cycle, that is, at fixed intervals. Alternatively, the first analysis and the second analysis may be executed in a first cycle in a period in which there is a high possibility that the temperature change is large, and then may be executed in a second cycle that is longer than the first cycle. For example, the period is from immediately after the operation of the robot is started until a predetermined time elapses. Further, for example, the period is from immediately after the operation condition is changed until a predetermined time elapses, in a case where the operation condition is changed in the middle.

The analysis result providing unit 129 provides the user with the temperature change of the specific site of the robot, which is analyzed by the analysis unit 127. The specific site may be the casing of the reduction gear or the motor, or it may be the component member in the casing of the reduction gear or the motor.

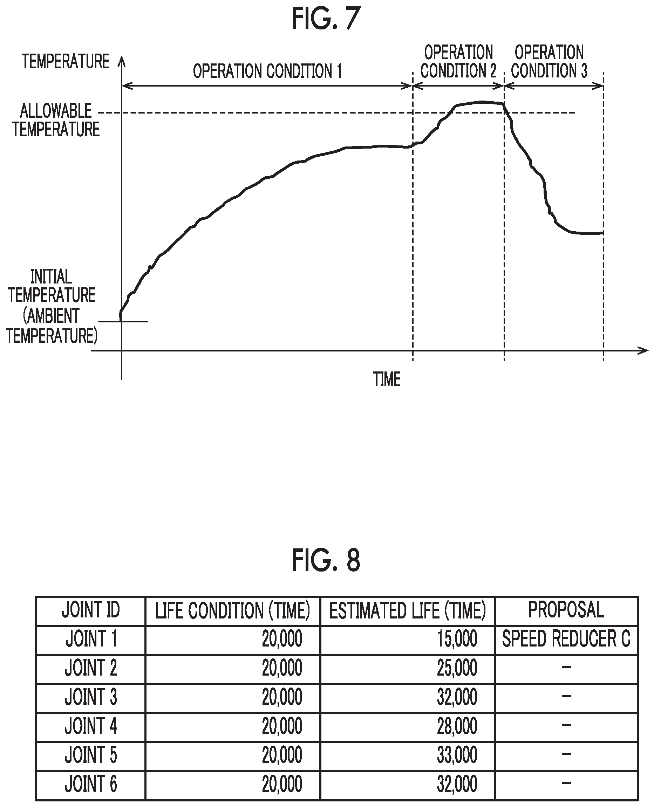

FIG. 7 is a graph showing still another example of the analysis result provided to the user. The analysis result of this example is the temperature change of the specific site of the robot, specifically, the casings of the motor and the reduction gear, which are incorporated in the robot. In FIG. 7, the horizontal axis is time, and the vertical axis is temperature. The graph is the analysis result and shows the temperature change. This example shows the temperature change of the casing of the motor and the casing of the reduction gear in a case where the robot is first operated under an operation condition 1, then the robot is operated under an operation condition 2, and then the robot is operated under an operation condition 3. The user can understand at a glance the temperature change of the casings of the motor and the reduction gear by checking the analysis result of FIG. 7.

The description returns to FIG. 2. The life estimating unit 130 estimates the life of the speed reducer in a case where the speed reducer specified by the speed reducer specifying unit 126, based on the designation received by the second reception unit 122, is incorporated into the joint of the robot having the specification received by the first reception unit 121, and then the robot is operated under the operation condition received by the third reception unit 123. For example, in a case where the life estimation button 35 of FIG. 3 is selected, the life estimation is executed. The life estimating unit 130 may use a known or future available estimation technique to estimate the life of the speed reducer. The life to be estimated is represented as a time until a failure in a case where the operation condition designated by the user is repeatedly performed. In a case where the robot includes a plurality of joints, the life estimating unit 130 may estimate the life of the candidate for the speed reducer of each joint.

For example, the life estimating unit 130 may use a known or future available life calculation equation to estimate the life. For example, the life calculation equation may include a rated life [h], a rated rotational speed [rpm], and a rated torque [Nm] of the speed reducer as parameters, and may include an average rotational speed [rpm] and an average load torque [Nm] of the speed reducer as variables. In this case, the life estimating unit 130 may substitute the average rotational speed and the average load torque, which are obtained by the analysis using the characteristic information stored in the speed reducer information storage unit 141, into the life calculation equation. A known or future available analysis technique is used for the analysis. The life estimating unit 130 or the analysis unit 127 may execute the analysis.

In a case where the speed reducer specifying unit 126 specifies a plurality of speed reducers for a certain joint, the life estimating unit 130 may sequentially perform the incorporation of the plurality of speed reducers and estimate the life of each speed reducer.

The estimated life providing unit 131 provides the user with an estimation result of the life of the speed reducer, which is estimated by the life estimating unit 130. The estimated life providing unit 131 transmits, for example, a life estimation result screen indicating the estimation result of the life to the user terminal 200 to display the life estimation result screen on the display of the user terminal 200.

The speed reducer proposing unit 132 determines whether or not the life of the speed reducer, which is estimated by the life estimating unit 130, satisfies a predetermined life condition. In a case where the estimated life does not satisfy the predetermined life condition, the speed reducer proposing unit 132 proposes another speed reducer different from the speed reducer to the user. The speed reducer proposing unit 132 transmits, for example, a proposal screen for proposing another speed reducer to the user terminal 200 to display the proposal screen on the display of the user terminal 200.

The predetermined life condition may be that the estimated life satisfies a life requirement set in advance. Specifically, the predetermined life condition may be that the estimated life (time) is equal to or larger than a generally required life (for example, 20,000 hours). Alternatively, the predetermined life condition may be that the estimated life is equal to or larger than the total number of operation cycles (for example, 1,000,000 cycles) in which a series of operation conditions input by the user is regarded as one cycle. Alternatively, the predetermined life condition may be that the estimated life is equal to or larger than the total number of operation cycles designated by the input from the user.

The predetermined life condition may be that the estimated life is equal to or larger than a required life designated by the user. The required life may be a time or a total rotational speed.

Another speed reducer is not particularly limited, but may be a speed reducer having a larger load capacity than the speed reducer designated by the user, that is, the speed reducer determined not to satisfy the predetermined life condition, typically, a larger speed reducer. In this case, another speed reducer may be all speed reducers having a larger load capacity than the speed reducer designated by the user, among all speed reducers stored in the speed reducer information storage unit 141.

Alternatively, another speed reducer may be a speed reducer having a larger load capacity than the speed reducer designated by the user and having a load capacity closest to the load capacity of the speed reducer designated by the user, among the plurality of speed reducers stored in the speed reducer information storage unit 141. That is, another speed reducer may be a speed reducer having a size larger than the speed reducer designated by the user, among the plurality of speed reducers stored in the speed reducer information storage unit 141.

For the speed reducer that does not satisfy the predetermined life condition, the speed reducer proposing unit 132 provides the user with the type specification information of another speed reducer proposed by the speed reducer proposing unit 132.

FIG. 8 is a table showing an example of a life estimation result screen provided to the user. The life estimation result screen of this example includes a joint ID of each joint, a life condition required for the speed reducer of each joint, an estimated life of the speed reducer of each joint designated by the user, and type specification information of another speed reducer proposed in a case where the life condition is not satisfied. In this example, the life estimation result screen also serves as the proposal screen for another speed reducer.

With checking of the life estimation result screen of FIG. 8, the user can understand at a glance the life of the speed reducer designated by the user, whether or not the life satisfies the life condition, and another speed reducer proposed in a case where the life condition is not satisfied.

The above is the configuration related to the selection assistive function. Subsequently, an operation related to the selection assistive function will be described. The assistive device 100 provides the selection assistive screen 20 to the user terminal 200 in response to a request. The user inputs, to the selection assistive screen 20 via the user terminal 200, the specification information of the robot, the designation of the speed reducer to be incorporated into the robot, and the operation condition of the robot.

In a case where the analysis button 34 of the selection assistive screen 20 is selected, the user terminal 200 transmits each information item of the selection assistive screen 20 to the assistive device 100. Each of the first reception unit 121, the second reception unit 122, and the third reception unit 123 of the assistive device 100 receives the specification information of the robot, the designation of the speed reducer to be incorporated into the robot, and the operation condition of the robot. The analysis unit 127 analyzes the behavior of the robot in a case where the speed reducer specified based on the designation received by the second reception unit 122 is incorporated into the joint of the robot having the specification received by the first reception unit 121 and the robot is operated under the operation condition received by the third reception unit 123. In this analysis, the analysis unit 127 uses, as the characteristic information of the speed reducer incorporated into each joint, the characteristic information stored in the speed reducer information storage unit 141, that is, the characteristic information that changes according to the situation change such as the temperature or the rotational speed. The analysis unit 127 analyzes, for example, the behavior of the robot including the temperature change of the specific site of the robot. The analysis result providing unit 129 provides the user with an analysis result by the analysis unit 127.

In a case where the life estimation button 35 of the selection assistive screen 20 is selected, the user terminal 200 transmits each information item of the selection assistive screen 20 to the assistive device 100. Each of the first reception unit 121, the second reception unit 122, and the third reception unit 123 of the assistive device 100 receives the specification information of the robot, the designation of the speed reducer to be incorporated into the robot, and the operation condition of the robot. The life estimating unit 130 estimates the life of the speed reducer in a case where the speed reducer specified based on the designation received by the second reception unit 122 is incorporated into the joint of the robot having the specification received by the first reception unit 121 and the robot is operated under the operation condition received by the third reception unit 123. In this case, the life estimating unit 130 performs, for example, the analysis using the characteristic information stored in the speed reducer information storage unit 141 and substitutes the average rotational speed and the average load torque obtained by the analysis into the life calculation equation to calculate the life of the speed reducer. The estimated life providing unit 131 provides the user with the estimation result of the life of the speed reducer, which is estimated by the life estimating unit 130. In a case where the life of the speed reducer estimated by the life estimating unit 130 does not satisfy the predetermined life condition, the speed reducer proposing unit 132 proposes another speed reducer different from the speed reducer to the user.

The above is the operation related to the selection assistive function. Subsequently, effects of the selection assistive function will be described.

According to the present embodiment, the assistive device 100 analyzes the behavior of the robot, based on the specification information of the robot, the designation of the speed reducer, and the operation condition of the robot received from the user, and the stored characteristic information of the speed reducer, and provides the user with the analysis result. The assistive device 100 stores, as the characteristic information of the speed reducer, the characteristic information that changes according to the situation change of the speed reducer, and executes the analysis in consideration of the situation change of the speed reducer. Therefore, according to the present embodiment, it is possible to execute the analysis with high accuracy while reducing burden on the user, and thus to appropriately select the speed reducer.

Further, according to the present embodiment, the assistive device 100 analyzes, as the behavior of the robot, the temperature change of the specific site of the robot, for example, the component member in the casing of the reduction gear or the motor, and presents the analysis result to the user. The movement of speed reducer generates heat, which may affect the temperature of the specific site of the robot. For example, in a case where the temperature of the motor of the robot exceeds an allowable temperature, there is a risk that an abnormality due to an overload may occur in the motor. On the contrary, with the analysis of the temperature change of the specific site during the operation of the robot and the presentation of the analysis result, it is possible to check whether or not the temperature of the specific site during the operation of the robot is equal to or less than the allowable temperature. Therefore, the user can select a more appropriate speed reducer.

Further, according to the present embodiment, in a case where the plurality of speed reducers that match the designation of the speed reducer from the user are present, the assistive device 100 sequentially incorporates the plurality of speed reducers into the joint of the robot, analyzes the behavior in each case, and provides the user with the analysis results. With the presentation of the analysis result in a case where each of the plurality of candidates is incorporated, the user can select a more appropriate speed reducer.

Further, according to the present embodiment, the assistive device 100 receives the operation condition of the robot from the user, and analyzes the behavior of the robot in a case where the robot is operated under the operation condition. With the analysis of the behavior in a case where the robot is operated under the actual operation condition, it is possible to make a more appropriate selection.

Further, according to the present embodiment, the assistive device 100 receives the specification information of the robot input in the form in which the template of the robot prepared in advance is changed. In other words, the user can input the specification information of the robot in the form in which the template of the robot prepared in advance is changed. Accordingly, the burden on the user is reduced.

Further, according to the present embodiment, the assistive device 100 estimates the life of the speed reducer, based on the specification information of the robot received from the user, the designation of the speed reducer to be incorporated into the joint of the robot, the operation condition of the robot, and the characteristic information of the stored speed reducer, and provides the user with the estimation result. Therefore, according to the present embodiment, it is possible to reduce the burden on the user for the life estimation of the speed reducer and the selection of the speed reducer.

Further, according to the present embodiment, in a case where the plurality of speed reducers that match the designation of the speed reducer from the user are present, the assistive device 100 sequentially incorporates the plurality of speed reducers into the joint of the robot, estimates the life in each case, and provides the user with the estimation result. With the presentation of the estimation result of the life in a case where each of the plurality of candidates is incorporated, the user can select a more appropriate speed reducer.

### <Supervised Data Creation Function>

Returning to FIG. 2, the supervised data creation function will be described. The supervised data creation function is mainly realized by the raw material information storage unit 142, the robot state information storage unit 143, the first reception unit 121, the second reception unit 122, the third reception unit 123, the screen providing unit 125, the speed reducer specifying unit 126, the robot state information creating unit 133, and the robot state information providing unit 134.

FIG. 9 is a table showing an example of a data structure of the raw material information storage unit 142.

The raw material information storage unit 142 stores information for creating robot state information. The raw material information storage unit 142 stores the speed reducer ID, data ID, the characteristic information of the speed reducer, and state information of the speed reducer in association with each other. That is, the speed reducer information storage unit 141 stores, for each of the plurality of speed reducers, a data set of the speed reducer ID, the data ID, the characteristic information, and the state information.

The type specification information includes a model, frame number, reduction ratio, and the like of the speed reducer.

In a case where the speed reducer is the reduction gear, the characteristic information includes the characteristic information of the reduction gear. In a case where the speed reducer is the gear motor, the characteristic information includes the characteristic information of both the reduction gear and a motor, which configure the gear motor. The characteristic information includes stiffness, the friction, the angular transmission error, and the like.

The state information indicates a state of the speed reducer. A normal state indicates that the speed reducer is normal, that is, the characteristic information of the speed reducer in a normal state. An abnormal state indicates that the speed reducer is abnormal, that is, the characteristic information of the speed reducer in an abnormal state.

The raw material information storage unit 142 may store the information related to all the speed reducers manufactured by the speed reducer manufacturer 102. Further, the speed reducer information storage unit 141 may store the information related to the speed reducers that have been manufactured in the past (that is, manufacturing has been ended), in addition to the information related to the speed reducers being manufactured.

In the raw material information storage unit 142, nₐ pieces, n_{b} pieces, n_{c} pieces, n_{d} pieces, nₑ pieces, n_{f} pieces, n_{g} pieces, and the like of data sets are respectively stored for the speed reducers of which the speed reducer IDs are a speed reducer A, a speed reducer B, a speed reducer C, a speed reducer D, a speed reducer E, a speed reducer F, a speed reducer G, and the like. The nₐ, n_{b}, n_{c}, n_{d}, nₑ, n_{f}, and n_{g} are all integers equal to or larger than two.

The raw material information storage unit 142 stores, for each of the plurality of speed reducers, both a data set in which the state information is normal and a data set in which the state information is abnormal. That is, the raw material information storage unit 142 stores, for each of the plurality of speed reducers, both the characteristic information of the speed reducer in the normal state and the characteristic information of the speed reducer in the abnormal state.

The raw material information storage unit 142 preferably stores, for each of the plurality of speed reducers, a plurality of data sets, more preferably a large number of data sets, in which the state of the speed reducer is normal and the pieces of characteristic information are different from each other. Further, the speed reducer information storage unit 141 preferably stores, for each of the plurality of speed reducers, a plurality of data sets, more preferably a large number of data sets, in which the state of the speed reducer is abnormal and the pieces of characteristic information are different from each other. The fact that the pieces of characteristic information are different from others means that at least one of the stiffness, the friction, and the angular transmission error is different from each other.

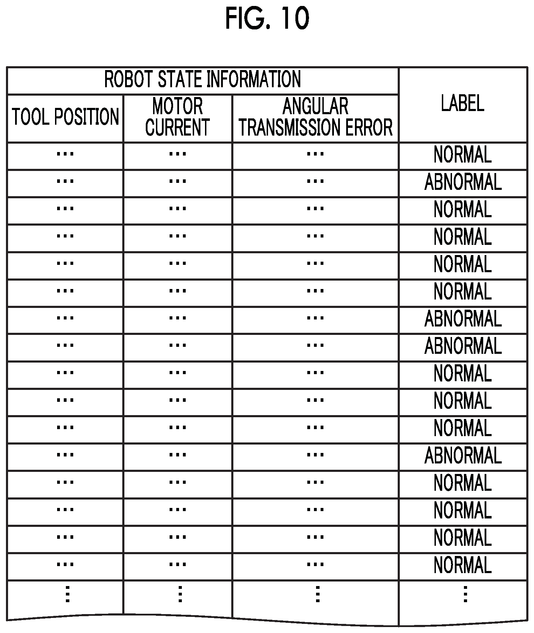

FIG. 10 is a table showing an example of a data structure of the robot state information storage unit 143.

The robot state information storage unit 143 stores the robot state information indicating a state of the robot in a case where the robot is operated, in association with a label indicating whether or not an abnormality has occurred in the robot in a case where the robot is in the state. That is, the robot state information storage unit 143 stores supervised data in which the label indicating whether or not an abnormality has occurred in the robot is assigned to the robot state information.

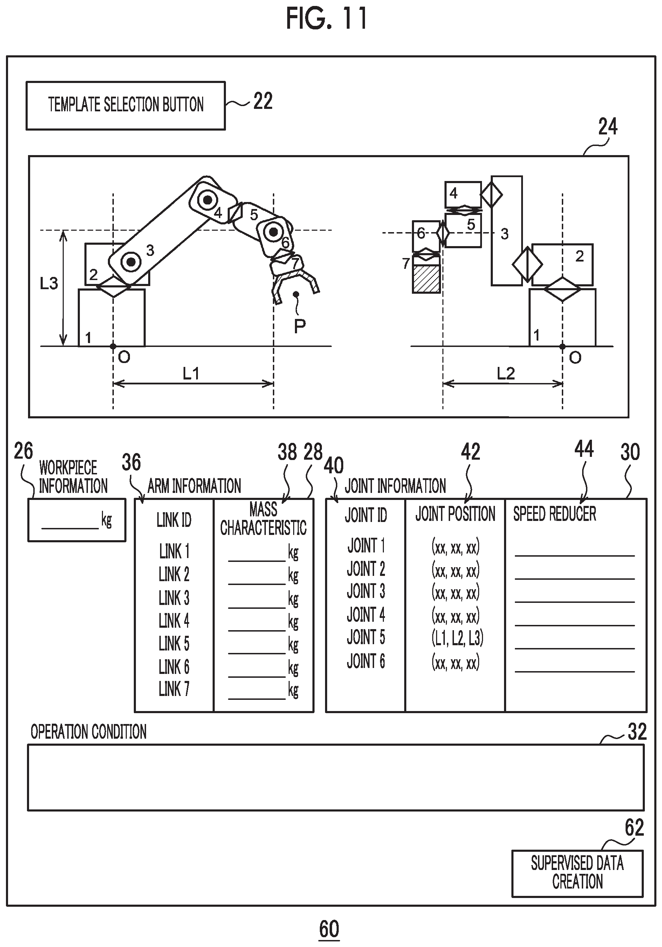

In this example, the robot state information includes a tool position, a motor current, and a vibration. The tool position is a position of the reference point P of the tool attached to the tip of the arm of the robot (refer to FIG. 11 described below). The motor current is a motor current of the motor that drives the speed reducer. The motor is, in a case where the speed reducer is a reduction gear, a motor connected to the speed reducer, and is, in a case where the speed reducer is a gear motor, a motor configuring the gear motor. The vibration is a vibration at a predetermined position of the robot.

Returning to FIG. 2, the screen providing unit 125 transmits a supervised data creation screen, which is a screen for creating the supervised data, to the user terminal 200 in response to a request, and displays the supervised data creation screen on the display of the user terminal 200.

FIG. 11 is a diagram showing an example of a supervised data creation screen 60 provided by the screen providing unit 125. The supervised data creation screen 60 includes the template selection button 22, the robot display region 24, the workpiece information field 26, the arm information region 28, the joint information region 30, the operation condition field 32, and a supervised data creation button 62.

The template selection button 22, the robot display region 24, the workpiece information field 26, and the operation condition field 32 are each configured in the same manner as those in FIG. 3. The user selects, from the list of templates displayed by selecting the template selection button 22, a template corresponding to a robot into which the selected speed reducer is incorporated or has been incorporated.

In the present embodiment, the arm information region 28 includes the link ID field 36 and the link mass characteristic field 38. Further, the joint information region 30 includes the joint ID field 40, the joint position field 42, and the speed reducer field 44. The information for designating the speed reducer, which is incorporated into or has been incorporated into each joint, is input into the speed reducer field 44.

In a case where the supervised data creation button 62 is selected, each information item in FIG. 11 is transmitted from the user terminal 200 to the assistive device 100, and the creation of the supervised data to be described below is executed in the assistive device 100.

The description returns to FIG. 2. As described regarding the selection assistive function, the first reception unit 121 receives, from the user via the user terminal 200, the specification information of the robot. In the supervised data creation function, the first reception unit 121 receives, from the user terminal 200, the information item related to the specification of the robot in the supervised data creation screen 60 of FIG. 11.

As described regarding the selection assistive function, the second reception unit 122 receives, from the user via the user terminal 200, the designation of the speed reducer to be incorporated into each joint of the robot. In the supervised data creation function, the second reception unit 122 receives, from the user terminal 200, the input into the speed reducer field 44 in the supervised data creation screen 60 of FIG. 11.

As described regarding the selection assistive function, the third reception unit 123 receives, from the user via the user terminal 200, the operation condition of the robot. In the supervised data creation function, the third reception unit 123 receives, from the user terminal 200, the input into the operation condition field 32 in the supervised data creation screen 60 of FIG. 11.

As described regarding the selection assistive function, the speed reducer specifying unit 126 specifies the speed reducer based on the designation of the speed reducer received by the second reception unit 122.

The robot state information creating unit 133 creates the robot state information indicating the state of the robot in a case where the speed reducer specified by the speed reducer specifying unit 126, based on the designation received by the second reception unit 122, is incorporated into the joint of the robot having the specification received by the first reception unit 121, and then the robot is operated under the operation condition received by the third reception unit 123. The robot state information creating unit 133 executes the creation, for example, in a case where the supervised data creation button 62 in FIG. 11 is selected.

The robot state information creating unit 133 may create, with the analysis through simulation, the robot state information in a case where the speed reducer is incorporated into the robot and the robot is operated under the operation condition. In this case, the robot state information creating unit 133 may use a known or future available analysis technique to perform the analysis.

In the creation, the robot state information creating unit 133 uses the characteristic information stored in the raw material information storage unit 142, as the characteristic information of the speed reducer of each joint. The robot state information creating unit 133 creates, while changing a combination of the characteristic information of the speed reducer of each joint, the robot state information for each combination. The robot state information creating unit 133 creates the robot state information in a case where a normal speed reducer and an abnormal speed reducer are used for each joint.

For example, in a case where the robot includes joints 1 to 6 and the speed reducers A to F are each incorporated into the joints, the robot state information creating unit 133 may create (nₐ × n_{b} × n_{c} × n_{d} × nₑ × n_{f}) pieces of robot state information through exhaustive combinations of nₐ pieces of characteristic information of the speed reducer A of the joint 1, n_{b} pieces of characteristic information of the speed reducer B of the joint 2, n_{c} pieces of characteristic information of the speed reducer C of the joint 3, n_{d} pieces of characteristic information of the speed reducer D of the joint 4, nₑ pieces of characteristic information of the speed reducer E of the joint 5, and n_{f} pieces of characteristic information of the speed reducer F of the joint 6.

The robot state information creating unit 133 stores the created robot state information in the robot state information storage unit 143. The robot state information creating unit 133 particularly stores the robot state information in the robot state information storage unit 143, in association with the label indicating whether or not an abnormality has occurred in the robot in a case where the robot is in the state.

In a case where all the speed reducers of the respective joints used for the creation of the robot state information are normal, the robot state information creating unit 133 sets the created robot state information as normal robot state information, that is, the robot state information in a case where the robot is normal. In this case, the robot state information creating unit 133 stores the robot state information in the robot state information storage unit 143, in association with a normal label.

In a case where at least one speed reducer, among the speed reducers of the respective joints used for the creation of the robot state information, is abnormal, the robot state information creating unit 133 sets the created robot state information as abnormal robot state information, that is, the robot state information in a case where the robot (specifically, at least one speed reducer incorporated into robot) is abnormal. In this case, the robot state information creating unit 133 stores the robot state information in the robot state information storage unit 143, in association with an abnormal label.

Returning to FIG. 2, the robot state information providing unit 134 provides the user with the robot state information in which the label stored in the robot state information storage unit (supervised data storage unit) 143 is associated, that is, the supervised data. The robot state information providing unit 134 transmits, for example, the supervised data to the user terminal 200.

The above is the configuration related to the supervised data creation function. Subsequently, an operation related to the supervised data creation function will be described. The assistive device 100 provides the supervised data creation screen 60 to the user terminal 200 in response to a request. The user inputs, via the user terminal 200, the specification information of the robot, the designation of the speed reducer that is incorporated into or has been incorporated into the robot, and the operation condition of the robot on the supervised data creation screen 60.

In a case where the supervised data creation button 62 on the supervised data creation screen 60 is selected, the user terminal 200 transmits each information item on the supervised data creation screen 60 to the assistive device 100. The first reception unit 121, the second reception unit 122, and the third reception unit 123 of the assistive device 100 each receive the specification information of the robot, the designation of the speed reducer that is incorporated into or has been incorporated into the robot, and the operation condition of the robot. The robot state information creating unit 133 creates the robot state information indicating the state of the robot in a case where the speed reducer specified based on the designation received by the second reception unit 122 is incorporated into the joint of the robot having the specification received by the first reception unit 121 and the robot is operated under the operation condition received by the third reception unit 123. In this case, the robot state information creating unit 133 uses the characteristic information, which is stored in the raw material information storage unit 142, as the characteristic information of the speed reducer incorporated into each joint. The robot state information creating unit 133 stores the created robot state information in the robot state information storage unit 143, in association with the label indicating whether or not an abnormality has occurred in the robot in a case where the robot is in the state. The robot state information providing unit 134 provides the user with the robot state information associated with the label, that is, the supervised data.

The above is the operation related to the supervised data creation function. Subsequently, effects of the supervised data creation function will be described.

According to the present embodiment, the assistive device 100 creates the state information of the robot, based on the specification information of the robot, the designation of the speed reducer, and the operation condition of the robot received from the user, and the stored characteristic information of the speed reducer. The assistive device 100 sets the robot state information in a case where the speed reducer is normal as the normal robot state information, and sets the robot state information in a case where the speed reducer is abnormal as the abnormal robot state information. The assistive device 100 provides, as the supervised data, these pieces of information to the user terminal 200. Accordingly, it is possible to reduce the burden on the user for creating the supervised data for machine learning of the robot.

### (Second Embodiment)

In the first embodiment, the specification of the robot, the designation of the speed reducer to be incorporated into the robot, and the operation condition of the robot are received from the user, and the life of the speed reducer in a case where the robot in which the speed reducer is incorporated into the joint is operated under the operation condition is estimated and provided to the user. In a second embodiment, the specification of the robot and the operation condition of the robot are received from the user, and a speed reducer suitable for a case where the robot is operated under the operation condition is proposed. Hereinafter, differences from the first embodiment will be mainly described.

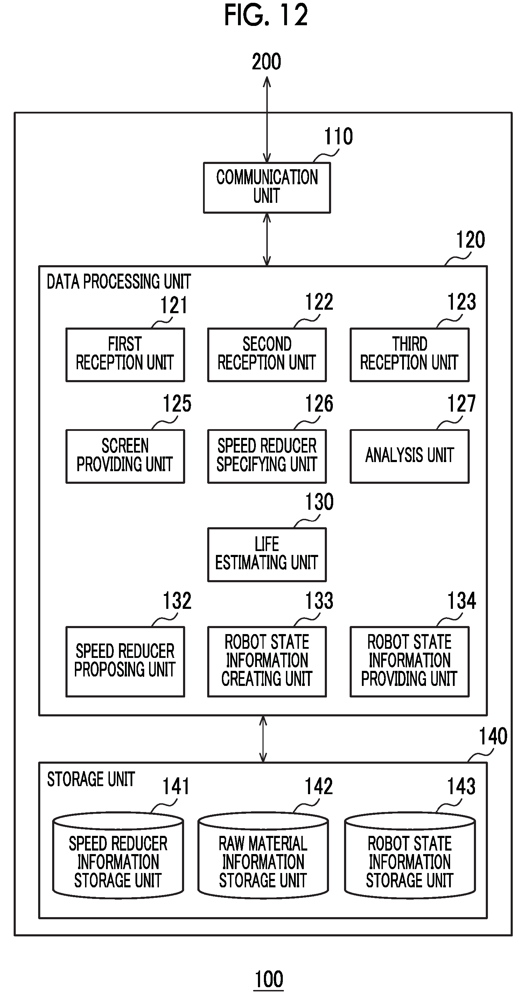

FIG. 12 is a block diagram showing functions and a configuration of the assistive device 100 of the second embodiment. The data processing unit 120 of the assistive device 100 of the second embodiment includes the first reception unit 121, the third reception unit 123, the screen providing unit 125, the speed reducer specifying unit 126, the analysis unit 127, the life estimating unit 130, the speed reducer proposing unit 132, the robot state information creating unit 133, and the robot state information providing unit 134.

The assistive device 100 realizes "selection assistive function" and "supervised data creation function". The supervised data creation function is realized in the same manner as in the first embodiment. Hereinafter, the selection assistive function will be mainly described with a focus on differences from the selection assistive function of the first embodiment.

The selection assistive function is mainly realized by the speed reducer information storage unit 141, the first reception unit 121, the third reception unit 123, the screen providing unit 125, and the speed reducer proposing unit 132.

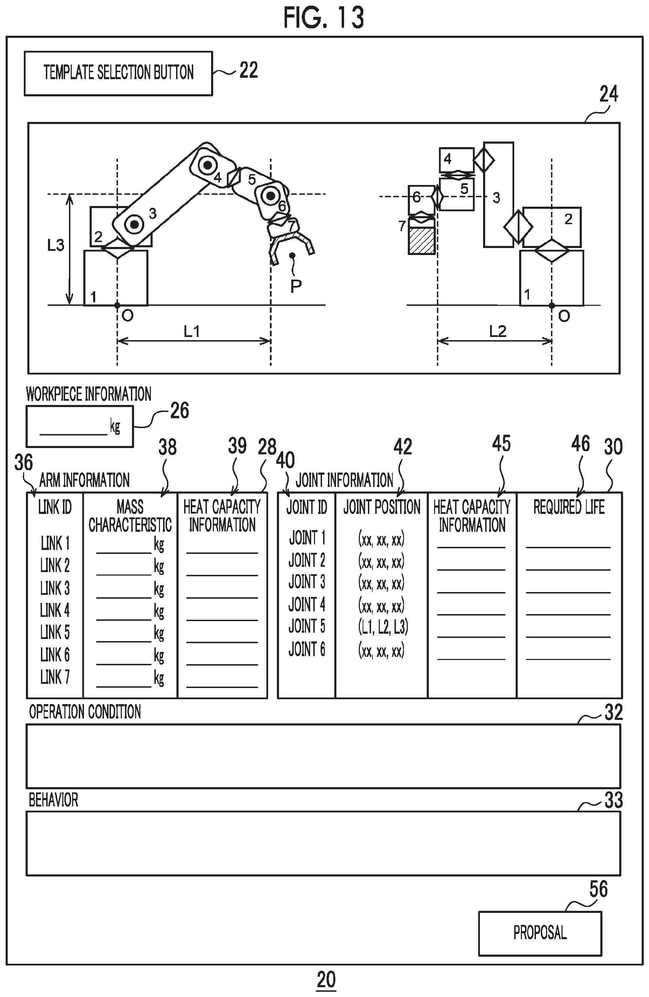

FIG. 13 is a diagram showing an example of the selection assistive screen 20 provided by the screen providing unit 125 in FIG. 12. The selection assistive screen 20 includes the template selection button 22, the robot display region 24, the workpiece information field 26, the arm information region 28, the joint information region 30, the operation condition field 32, behavior field 33, and a proposal button 56.

In the present embodiment, the joint information region 30 includes the joint ID field 40, the joint position field 42, the heat capacity information field 45, and a required life field 46. The required life of the speed reducer to be incorporated into each joint is input into the required life field 46.

The behavior of the robot desired to be realized in a case where the robot is operated under the operation condition input into the operation condition field 32 is input into the behavior field 33. For example, in a case where the operation condition includes the start point and the end point at which the reference point P of the tool attached to the tip of the arm of the robot moves, and the speed and the acceleration at which the reference point P moves, the behavior desired to be realized may be that the load applied to the speed reducer is equal to or less than a designated load, or a deviation from a command for a second position, which is a reaching position, may be equal to or less than a predetermined value. Further, for example, in a case where the operation condition is a three-dimensional target path, the behavior desired to be realized may be that the deviation from the command is equal to or less than a predetermined value. The behavior field 33 may be left blank.

In a case where the proposal button 56 is selected, each information item of FIG. 13 is transmitted from the user terminal 200 to the assistive device 100, and the assistive device 100 executes a proposal described below.

The description returns to FIG. 12. The third reception unit 123 of the present embodiment further receives the required life of the speed reducer to be incorporated into each joint of the robot. Specifically, the third reception unit 123 further receives the input into the required life field 46 of the selection assistive screen 20 of FIG. 13.

The life estimating unit 130 estimates the life of each of the plurality of speed reducers in a case where each of the plurality of speed reducers stored in the speed reducer information storage unit 141 is sequentially incorporated into the robot having the specifications received by the first reception unit 121 and the robot is operated under the operation condition received by the third reception unit 123.

The speed reducer proposing unit 132 proposes one or a plurality of speed reducers suitable for a case where the robot is operated under the operation condition received by the third reception unit 123, based on the estimation result of the life by the life estimating unit 130.

For example, the speed reducer proposing unit 132 may propose, as candidates, one or a plurality of speed reducers of which the estimated life is equal to or larger than the required life. In a case where there is one speed reducer of which the estimated life is equal to or larger than the required life, the speed reducer proposing unit 132 may propose, as a candidate, the one speed reducer. In a case where a plurality of speed reducers of which the estimated life is equal to or larger than the required life are present, the speed reducer proposing unit 132 may propose, as candidates, the plurality of speed reducers.

In a case where the required life is not input, the speed reducer proposing unit 132 may propose, as a candidate, a speed reducer having a longest estimated life.

Further, the third reception unit 123 may also receive the behavior desired to be realized in the robot. Specifically, in a case where the behavior desired to be realized in the robot is input into the behavior field 33 of the selection assistive screen 20 of FIG. 13, the third reception unit 123 may receive the input.

In this case, the analysis unit 127 analyzes the behavior for each speed reducer in a case where each of the plurality of speed reducers stored in the speed reducer information storage unit 141 is sequentially incorporated into the robot having the specifications received by the first reception unit 121 and the robot is operated under the operation condition received by the third reception unit 123. The speed reducer proposing unit 132 proposes, as candidates, one or a plurality of speed reducers having the estimated life that is equal to or larger than the required life and satisfying the behavior desired to be realized.

Further, in a case where the required life is not input and the behavior desired to be realized in the robot is input, the estimation of the life by the life estimating unit 130 may not be executed, and only the analysis of the behavior by the analysis unit 127 may be executed. In this case, the speed reducer proposing unit 132 proposes, as candidates, one or a plurality of speed reducers that satisfy the behavior desired to be realized.

The analysis unit 127 may analyze the temperature change of the specific site of the robot, for example, the component member in the casing of the reduction gear or the motor, in the same manner as in the first embodiment. That is, the behavior analyzed by the analysis unit 127 may include the temperature change of the specific site of the robot. In this case, the speed reducer proposing unit 132 may propose one or a plurality of speed reducers to the user, based on the analysis result of the temperature change. In a case where the estimation of the life and the analysis of the behavior are executed, the speed reducer proposing unit 132 may propose, as candidates, one or a plurality of speed reducers having the estimated life that is equal to or larger than the required life and satisfying a predetermined temperature condition. Further, in a case where the estimation of the life is not executed and only the analysis of the behavior is executed, the speed reducer proposing unit 132 may propose, as candidates, one or a plurality of speed reducers that satisfy the predetermined temperature condition. The predetermined temperature condition may be that the temperature of the specific site of the robot during the operation of the robot is equal to or less than the predetermined allowable temperature.

In a case where there is no speed reducer that satisfies the temperature condition, the speed reducer proposing unit 132 prompts the change of the operation condition. For example, the speed reducer proposing unit 132 transmits, to the user terminal 200, a screen indicating that the operation condition is required to be changed because there is no speed reducer that satisfies the temperature condition to display the screen on the display of the user terminal 200.

The above is the configuration related to the selection assistive function. Subsequently, an operation related to the selection assistive function will be described. Here, a case where the behavior desired to be realized by the robot is input into the behavior field 33 of the selection assistive screen 20 will be described.

The assistive device 100 provides the selection assistive screen 20 to the user terminal 200 in response to a request. The user inputs, via the user terminal 200, the specification information of the robot, the operation condition of the robot, and the required life of the speed reducer to the selection assistive screen 20. In a case where the proposal button 56 of the selection assistive screen 20 is selected, the user terminal 200 transmits each information item of the selection assistive screen 20 to the assistive device 100. The first reception unit 121 of the assistive device 100 receives the specification information of the robot. The third reception unit 123 receives the required life of the speed reducer, the operation condition of the robot, and the behavior desired to be realized by the robot. The life estimating unit 130 estimates the life of each of the plurality of speed reducers in a case where each of the plurality of speed reducers stored in the speed reducer information storage unit 141 is sequentially incorporated into the robot having the specifications received by the first reception unit 121 and the robot is operated under the operation condition received by the third reception unit 123. The analysis unit 127 analyzes the behavior for each speed reducer in a case where each of the plurality of speed reducers stored in the speed reducer information storage unit 141 is sequentially incorporated into the robot having the specifications received by the first reception unit 121 and the robot is operated under the operation condition received by the third reception unit 123. For example, the analysis unit 127 analyzes, as the behavior of the robot, the temperature change of the specific site of the robot. The speed reducer proposing unit 132 proposes the candidate for the speed reducer, based on the estimation result of the life and the analysis result of the behavior.

According to the present embodiment, the assistive device 100 estimates the life of each of the plurality of speed reducers in a case where each of the plurality of speed reducers is sequentially incorporated in the robot having the specification received from the user and the robot is operated under the operation condition received from the user, and proposes a candidate of the speed reducer based on the estimation result. Therefore, according to the present embodiment, it is possible to select a more appropriate speed reducer while reducing the burden on the user.

The assistive device 100 proposes, as a candidate, the speed reducer of which the estimated life is equal to or larger than the required life received from the user. According to the present embodiment, it is possible to select a more appropriate speed reducer.

Further, according to the present embodiment, the assistive device 100 may further receive the behavior desired to be realized by the robot. In this case, the assistive device 100 analyzes the behavior for each speed reducer in a case where each of the plurality of speed reducers is sequentially incorporated in the robot having the specification received from the user and the robot is operated under the operation condition received from the user. The assistive device 100 proposes, in addition to or instead of the estimation result, a candidate for the speed reducer based on the analysis result of the behavior of the robot. Therefore, according to the present embodiment, it is possible to select an appropriate speed reducer while reducing the burden on the user.

For example, the assistive device 100 analyzes, as the behavior of the robot, the temperature change of the specific site of the robot. In this case, the assistive device 100 can propose a candidate for the speed reducer that satisfies the predetermined temperature condition. Therefore, according to the present embodiment, it is possible to select a more appropriate speed reducer.

The present disclosure has been described above based on the embodiments. It should be understood by those skilled in the art that the embodiments are mere examples, various modification examples can be made to the combinations of the respective components and respective processing processes, and such modification examples are also within the scope of the present disclosure. Such modification examples will be described below.

### (First Modification Example)

In the above embodiment, the case where the life estimating unit 130 estimates the life of the entire speed reducer has been described, but the life estimating unit 130 may estimate the life of each of a plurality of sites of the speed reducer.

The life estimating unit 130 may use a known or future available estimation technique to estimate the life of each of the plurality of sites. Life estimation means may be different for each of the plurality of sites. For example, the life estimating unit 130 may use a known or future available life calculation equation for each of the plurality of sites to estimate the life of each of the plurality of sites. The plurality of sites may be, for example, a main bearing such as a crossed roller bearing, an eccentric bearing, and a tooth surface of a gear.

The estimated life providing unit 131 may provide the user with the estimated life of each of the plurality of sites of the speed reducer. Alternatively, the estimated life providing unit 131 may provide the user with the estimated life of a site having a shortest estimated life among the plurality of sites of the speed reducer. That is, the estimated life providing unit 131 may provide the user with the estimated life of the site having the shortest estimated life among the plurality of sites of the speed reducer, as the estimated life of the speed reducer.

The speed reducer proposing unit 132 may determine whether or not the life of the site having the shortest estimated life, among the plurality of sites estimated by the life estimating unit 130, satisfies a predetermined life condition, and may propose a speed reducer different from the speed reducer to the user in a case where the shortest estimated life does not satisfy the predetermined life condition.

### (Second Modification Example)

The third reception unit 123 may further receive, as the operation condition, an ambient temperature around the speed reducer. For example, the third reception unit 123 may receive the ambient temperature from the user via the user terminal 200. Further, a temperature sensor may be attached at an appropriate position, for example, to the speed reducer, and the third reception unit 123 may receive the ambient temperature from the temperature sensor. The life estimating unit 130 may estimate the life of the speed reducer in consideration of the ambient temperature received by the third reception unit 123. For example, in a case where the life estimating unit 130 estimates the life using a life calculation equation, the life calculation equation may include the ambient temperature [°C] as a variable. According to the present modification example, it is possible to estimate the life of the speed reducer with higher accuracy.

### (Third Modification Example)

Although not particularly mentioned in the embodiment, the life estimating unit 130 may estimate a life of a lubricant sealed in the speed reducer, in other words, a replacement cycle of the lubricant. That is, the life estimating unit 130 may estimate the life of the lubricant sealed in the speed reducer in a case where the speed reducer specified by the speed reducer specifying unit 126, based on the designation received by the second reception unit 122, is incorporated into the joint of the robot having the specification received by the first reception unit 121, and then the robot is operated under the operation condition received by the third reception unit 123. The life estimating unit 130 may use a known or future available technique to estimate the life of the lubricant.

### (Fourth Modification Example)

In the embodiment, the robot state information creating unit 133 stores the robot state information and the label indicating whether or not an abnormality has occurred in the robot in association with each other in the robot state information storage unit 143, but the present disclosure is not limited thereto. The robot state information creating unit 133 may associate the robot state information and a label indicating whether each speed reducer of each joint is normal or abnormal.

### (Fifth Modification Example)

Unlike the embodiment, the state information of the raw material information storage unit 142 may include a warning state in addition to the normal state and the abnormal state. The warning state indicates a state in which there is a high possibility that a failure occurs in the speed reducer. In this case, in a case where at least one speed reducer of the speed reducers of the respective joints used for creating the robot state information is in the warning state, the robot state information creating unit 133 sets the created robot state information as the robot state information in the warning state, that is, the robot state information in a case where the robot (specifically, at least one speed reducer incorporated in robot) is in the warning state. In this case, the robot state information creating unit 133 stores the robot state information in the robot state information storage unit 143, in association with a label indicating the warning state. Further, for example, a new state may be set to "0", a complete failure state may be set to "1", and states between the new state and the complete failure state may be labeled in increments of 0.1. In this case, a predetermined range (for example, 0.5 to 0.7) may be set as the warning state, and a range above the predetermined range (for example, 0.8 or more) may be set as the failure state.

In the embodiments and the modification examples, the assistive device 100 has been mainly described as a device. However, the present disclosure can also be regarded as a speed reducer selection assistive method including each step executed by the assistive device 100, as a disclosure of a program for causing the assistive device 100 to execute each step, or as a disclosure of a storage medium storing the program.

### Industrial Applicability

The present disclosure can be used for an assistive device.

### Reference Signs List

- 10: assistive system
- 100: assistive device
- 121: first reception unit
- 122: second reception unit
- 123: third reception unit
- 127: analysis unit
- 129: analysis result providing unit
- 140: storage unit

## Claims

1. An assistive device comprising:
a storage unit that stores, in association with information enabling a type of a speed reducer to be specified, characteristic information of the speed reducer, the characteristic information changing according to a situation change of the speed reducer;
a first reception unit that receives specification information of a robot;
a second reception unit that receives designation of a speed reducer to be incorporated into each joint of the robot;
an analysis unit that analyzes behavior of the robot in which the designated speed reducer is incorporated into each joint; and
a result providing unit that provides a user with an analysis result,
wherein the analysis unit analyzes the behavior of the robot including a temperature change of a specific site of the robot.

2. The assistive device according to claim 1, wherein the first reception unit receives, as the specification information of the robot, information enabling a heat capacity of each member of the robot to be specified.

3. The assistive device according to claim 1, further comprising:
a third reception unit that receives an operation condition of the robot,
wherein the third reception unit receives a plurality of consecutive operation conditions, and
the analysis unit analyzes, as the behavior, a continuous temperature change in the plurality of consecutive operation conditions.

4. An assistive device comprising:
a storage unit that stores, in association with information enabling a type of a speed reducer to be specified, characteristic information of the speed reducer, the characteristic information changing according to a situation change of the speed reducer;
a first reception unit that receives specification information of a robot;
a third reception unit that receives an operation condition of the robot;
an analysis unit that analyzes a temperature change of a specific site of the robot in a case where the robot is operated under a designated operation condition; and
a speed reducer proposing unit that proposes, based on an analysis result, one or a plurality of speed reducers to a user.

5. The assistive device according to claim 4,
wherein in a case where there is no speed reducer satisfying the temperature condition, a change in the operation condition is prompted.
